(19) **Europäisches Patentamt / European Patent Office / Office européen des brevets**

(11) **EP 3 581 313 A1**

(12) **EUROPEAN PATENT APPLICATION**
published in accordance with Art. 153(4) EPC

(43) Date of publication:
**18.12.2019 Bulletin 2019/51**

(21) Application number: **17895943.3**

(22) Date of filing: **30.11.2017**

(51) Int Cl.:
*B23K 9/10* (2006.01)          *B23K 9/095* (2006.01)
*B23K 9/29* (2006.01)

(86) International application number:
**PCT/JP2017/043010**

(87) International publication number:
**WO 2018/146920 (16.08.2018 Gazette 2018/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.02.2017 JP 2017021218**

(71) Applicant: **Daihen Corporation**
**Osaka-shi, Osaka 532-8512 (JP)**

(72) Inventors:
• **ONISHI, Takanori**
  **Osaka-shi**
  **Osaka 532-8512 (JP)**
• **IMAMACHI, Hiroki**
  **Osaka-shi**
  **Osaka 532-8512 (JP)**

(74) Representative: **Boult Wade Tennant LLP**
**Salisbury Square House**
**8 Salisbury Square**
**London EC4Y 8AP (GB)**

(54) **WELDING TORCH AND WELDING SYSTEM**

(57) According to an aspect of the present disclosure a welding torch is provided. The welding torch includes a sensor unit, a welding information obtaining unit, and a communication unit. The sensor unit detects travel direction information of the welding torch and posture information of the welding torch. The welding information obtaining unit obtains welding information appropriate for the travel direction information and the posture information detected by the sensor unit. The communication unit transmits the welding information obtained by the welding information obtaining unit to a welding power supply that supplies electric power to the welding torch.

FIG.1B

**Description**

TECHNICAL FIELD

The present disclosure relates to a welding torch and a welding system.

BACKGROUND ART

Arc welding is known which uses electric power from a welding power supply to create an arc between a welding torch and a workpiece for welding. In semi-automatic arc welding, welding is performed with a welding torch gripped by an operator and the extremity of the welding torch brought close to the workpiece.

SUMMARY OF THE INVENTION

In semi-automatic arc welding, for example, the welding condition may vary depending on the posture of the welding torch. In the case of back-step welding, which refers to the welding performed with the welding torch inclined toward the welding travel direction, a bead with a deep penetration, a high build-up and a small width is formed. On the other hand, in the case of progressive welding, which refers to the welding performed with the welding torch inclined in the direction opposite to the welding travel direction, a bead with a shallow penetration, a low build up and a large width is formed. When the welding torch is not inclined with respect to the welding travel direction, the resulting bead has properties between those obtained by progressive welding and those obtained by back-step welding. Operators are supposed to perform welding while maintaining the inclination of the welding torch appropriate for the conditions such as the thickness of the workpiece W. However, depending on the skill level of the operator, it may be difficult to move the welding torch while maintaining the inclination of the welding torch, and the inclination of the welding torch may change in the middle of the welding process . Such a change in inclination of the welding torch cause a change in the welding condition, which may degrade the welding quality. In particular, excessively large inclination of the welding torch during progressive welding may increase spatters, which further degrades the welding quality.

The present disclosure has been proposed under the foregoing circumstances and aims to provide a welding torch capable of preventing degradation of the welding quality, and a welding system provided with such a welding torch.

According to a first aspect of the present disclosure, a welding torch is provided. The welding torch includes a sensor unit, a welding information obtaining unit and a communication unit. The sensor unit detects travel direction information on the welding torch and posture information on the welding torch. The welding information obtaining unit obtains welding information corresponding to the travel direction information and the posture information detected by the sensor unit. The communication unit transmits the welding information obtained by the welding information obtaining unit to the welding power supply that supplies electric power to the welding torch.

According to a second aspect of the present disclosure, a welding system is provided. The welding system includes the welding torch provided according to the first aspect of the present disclosure and the welding power supply.

The "travel direction information" is the information indicating the direction of travel of the welding torch and may include the velocity vector of the extremity of the welding torch or the velocity along each of the three axes. The "posture information" is the information indicating the posture of the welding torch and may include the direction vector (posture vector) of the central axis of the extremity of the welding torch with respect to the direction of gravity. The "welding information" is a parameter value for controlling the welding power outputted from the welding power supply. For example, when the welding power supply performs DC output, a welding current set value, a welding voltage set value, a current rise rate at short circuit and the like correspond to the welding information . When the welding power supply performs pulse output, the base current set value, the peak current set value, the low-level period, the high-level period, the pulse frequency, the duty ratio, the rising and falling slope and the like of the pulse correspond to the welding information. When the welding power supply performs AC output, the AC frequency, the ratio of the time during which the welding torch is held positive and the like correspond to the welding information. The "torch angle" includes information indicating the angle of inclination of the welding torch that indicates the orientation with respect to the welding travel direction. For example, the torch angle is the inclination angle of the central axis of the extremity of the welding torch with respect to the vertical upward direction and may include information indicating the orientation with respect to the welding travel direction, a "push angle" or a "drag angle".

Other features and advantages of the present disclosure will become apparent from the detailed description given below with reference to the accompanying drawings.

BRIEF DESCRIPTION OF THE DRAWINGS

Fig. 1A is a schematic view illustrating the overall configuration of the welding system according to a first embodiment;

Fig. 1B is a block diagram illustrating the functional configuration of the welding system according to the first embodiment;

Fig. 2A is a front view showing the appearance of an example of welding torch according to the first embodiment;

Fig. 2B is a plan view showing the appearance of an example of welding torch according to the first embodiment;

Fig. 3 illustrates the relationship between a torch angle of the welding torch and a push angle or a drag angle;

Fig. 4 is a view for explaining the torch angle;

Fig. 5 is a flowchart for describing the welding information setting process;

Figs. 6A-C illustrate output current waveforms in the case where each type of welding information is changed in accordance with the torch angle θ;

Figs. 7A-C illustrate output current waveforms in the case where each type of welding information is changed in accordance with the torch angle θ;

Fig. 8A shows an example of a table that sets values of each type of welding information for the torch angle θ;

Fig. 8B illustrates output current waveforms in the case where each type of welding information is changed in accordance with the torch angle θ and the table shown in Fig. 8A;

Figs. 9A-B illustrate output current waveforms in the case where each type of welding information is changed in accordance with the torch angle θ; and

Fig. 10 is a block diagram illustrating the functional configuration of the welding system according to a second embodiment.

## MODE FOR CARRYING OUT THE INVENTION

Embodiments of the present disclosure are described below with reference to the accompanying drawings.

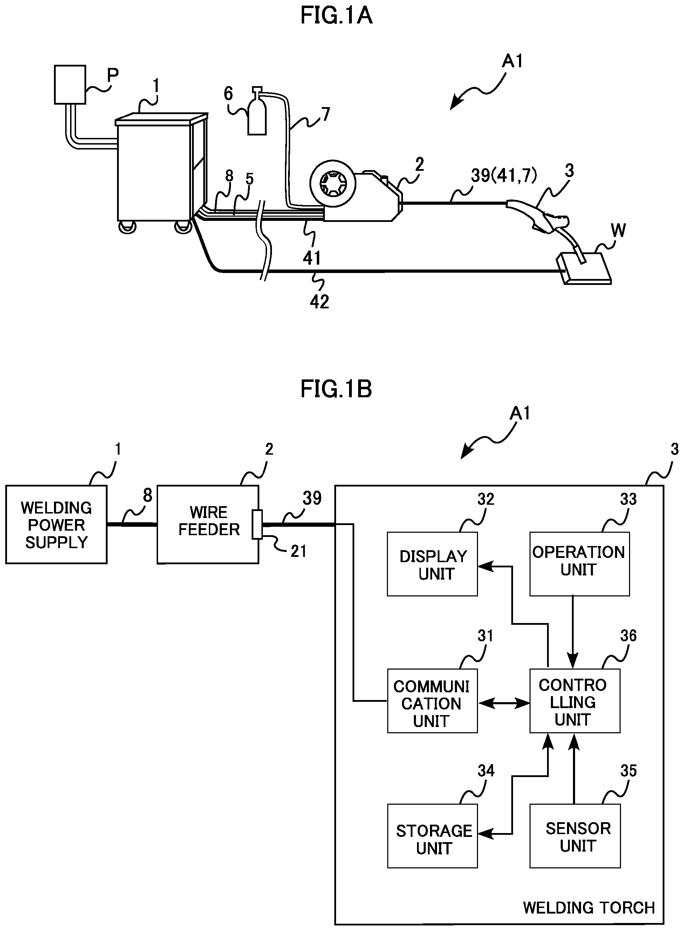

Figs. 1A-B are views for explaining a welding system A1 according to a first embodiment. Fig. 1A is a schematic view illustrating the overall configuration of the welding system A1. Fig. 1B is a block diagram illustrating the functional configuration of the welding system A1.

As shown in Fig. 1, the welding system A1 includes a welding power supply 1, a wire feeder 2, a welding torch 3, power cables 41 and 42, power transmission lines 5, signal lines 8, a gas cylinder 6 and gas pipes 7. One of the output terminals of the welding power supply 1 is connected to the welding torch 3 via the power cables 41. The wire feeder 2 feeds a wire electrode to the welding torch 3 to cause the extremity of the wire electrode to project from the extremity of the welding torch 3. The power cables 41 and the wire electrode are electrically connected to each other at a contact tip disposed at the extremity of the welding torch 3. The other output terminal of the welding power supply 1 is connected to a workpiece W via the power cable 42. The welding power supply 1 causes an arc to be created between the extremity of the wire electrode projecting from the extremity of the welding torch 3 and the workpiece W and supplies electric power to the arc. The welding system A1 uses the heat of the arc to perform welding of the workpiece W.

The welding system A1 uses shielding gas during welding. The shielding gas in the gas cylinder 6 is supplied via the gas pipe 7 extending through the wire feeder 2 to the extremity of the welding torch 3. Electric power (e.g. DC 24V) for driving a feed motor, for example, is supplied from the welding power supply 1 to the wire feeder 2 via the power transmission line 5. The welding power supply 1 and the wire feeder 2 are in communication with each other via the signal line 8. In the welding system A1, cooling water may be circulated through the welding torch 3.

The welding power supply 1 supplies electric power for arc welding to the welding torch 3. The welding power supply 1 converts the three-phase AC power inputted from an electric power system P into electric power appropriate for arc welding and outputs the electric power. The welding power supply 1 also converts the three-phase AC power inputted from the electric power system P into DC power for driving the feed motor of the wire feeder 2, for example, and outputs the DC power to the wire feeder 2 via the power transmission line 5.

The welding power supply 1 is controlled to output electric power in accordance with the welding information. The welding information is changed in accordance with the operation of an operation unit (not shown). The welding power supply 1 changes the welding information in accordance with a signal inputted from the welding torch 3 via the signal line 8.

The wire feeder 2 feeds the wire electrode to the welding torch 3. The wire electrode is guided to the extremity of the welding torch 3 by passing through a liner provided in a torch cable 39 and the welding torch 3. The wire feeder 2 uses the electric power supplied from the welding power supply 1 via the power transmission line 5 to drive the feed motor or the like. This electric power is also supplied from the wire feeder 2 to the welding torch 3 via a power transmission line (not shown) provided in the torch cable 39. The wire feeder 2 communicates with the welding power supply 1 via the signal line 8. The wire feeder 2 also communicates with the welding torch 3 via a signal line (now shown) provided in the torch cable 39. The welding torch 3 and the welding power supply 1 communicate with each other by way of the wire feeder 2.

The wire feeder 2 and the welding torch 3 are connected to each other via the torch cable 39. The torch cable 39 is a cable connected to the base end of the welding torch 3 and contains therein a power cable 41, a gas pipe 7, a liner, a power transmission line and a signal line.

The connector 21 is a connection terminal for connecting the welding torch 3 and the wire feeder 2 to each other. For example, the connector 21 is a recessed connection terminal and receives a projecting torch plug (not shown) provided at an end of the torch cable 39 of the welding torch 3 to connect the welding torch 3 and the wire feeder 2. The connector 21 connects the power cable 41, the gas pipe 7, the liner, the power transmission line 5 and the signal line 8 in the wire feeder 2 to the power cable 41, the gas pipe 7, the liner, the power transmission line 5 and the signal line 8 in the torch cable 39, respectively.

The welding torch 3 performs welding of the workpiece W by using the welding power supplied from the welding power supply 1. The welding torch 3 includes, as functional blocks, the communication unit 31, a display unit 32, the operation unit 33, a storage unit 34, the sensor unit 35 and a controlling unit 36.

The communication unit 31 is provided for performing communication with the wire feeder 2. The communication unit 31 transmits a signal inputted from the controlling unit 36 to the wire feeder 2 via the signal line in the torch cable 39. The communication unit 31 also receives a signal inputted from the wire feeder 2 via the signal line in the torch cable 39 and outputs the signal to the controlling unit 36. As a communication standard, the CAN (Controller Area Network) may be used, for example.

The display unit 32 performs various types of display and includes a display device 321 (describe later) that may be a liquid crystal display device. The display unit 32 is controlled by the controlling unit 36 and displays the welding information stored in the storage unit 34.

The operation unit 33 includes a plurality of operation means and outputs an operation signal to the controlling unit 36 as each operation means is operated by the operator. The operation means may include a torch switch 331 and an operation button 332 as described later. The operation unit 33 may include other operation means.

The storage unit 34 stores various set values of welding information as well as information such as total welding time.

The sensor unit 35 includes a plurality of sensors and outputs the values detected by each sensor to the controlling unit 36. In the present embodiment, the sensor unit 35 includes an acceleration sensor 351 and a gyro sensor 352 that are described later. The sensor unit 35 may include other sensors.

The controlling unit 36, which controls the welding torch 3, is embodied by a microcomputer, for example. The controlling unit 36 performs predetermined processing in response to an operation signal inputted from the operation unit 33. The controlling unit 36 also controls communication by the communication unit 31, writing or reading of information into or out of the storage unit 34 and display by the display unit 32. The controlling unit 36 also performs predetermined computation based on a detected value inputted from the sensor unit 35 and uses the computation results for processing. Specifically, the controlling unit 36 computes the torch angle (described later) based on the value detected by the acceleration sensor 351 and the value detected by the gyro sensor 352 and sets the welding information appropriate for the torch angle. The process for setting the welding information appropriate for speed information is described later.

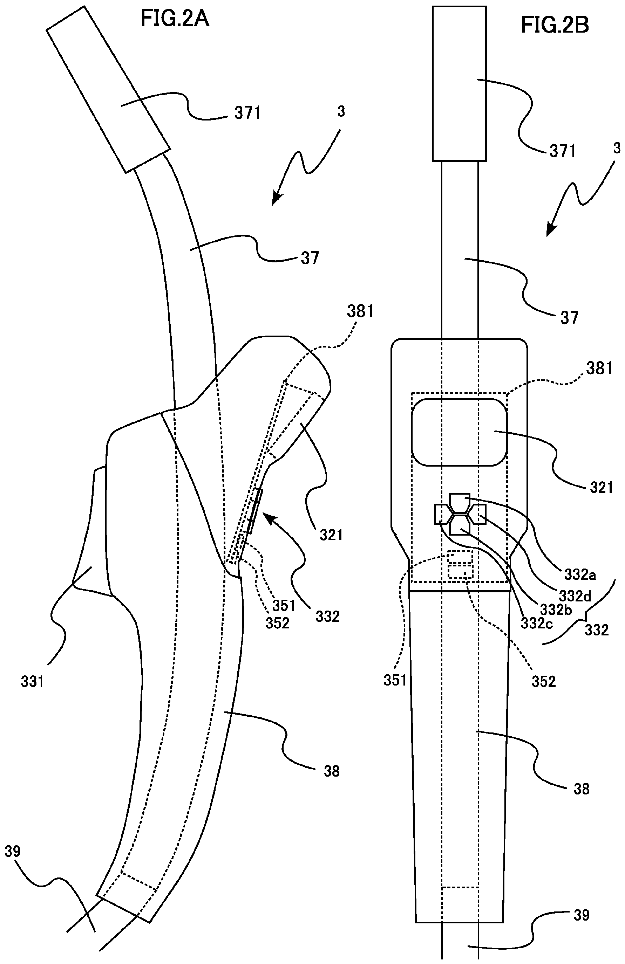

Figs. 2A-B show the appearance of an example of the welding torch 3. Fig. 2A is a front view, and Fig. 2B is a plan view. As shown in Figs. 2A-B, the welding torch 3 includes a torch body 37, a handle 38, a controlling board 381, the torch switch 331, the operation button 332, the display device 321, an acceleration sensor 351, a gyro sensor 352 and a torch cable 39.

The torch body 37 is a cylindrical member made of a metal and contains therein a liner, through which a welding cable is passed, a power cable 41 and a gas pipe 7. To the extremity of the torch body 37 is attached a nozzle 371. The torch body 37 has a curved portion for allowing the operator to easily direct the nozzle 371 toward the workpiece W.

The handle 38 is to be gripped by an operator and supports the base end of the torch body 37. The operator performs the welding operation while gripping the handle 38. The torch switch 331, the operation button 332 and the display device 321 are arranged at the handle 38. The controlling board 381 is arranged inside the handle 38. On the controlling board 381 is mounted a circuit that constitutes the communication unit 31, the display unit 32, the operation unit 33, the storage unit 34, the sensor unit 35 and the controlling unit 36.

The torch switch 331 is an operation means for receiving the welding start/stop operation and arranged at a location that allows the operator gripping the handle 38 to easily press with their forefingers. When the torch switch 331 is switched to ON (pressed), an operation signal is outputted to the controlling unit 36. When the operation signal is inputted to the welding power supply 1, the welding power supply 1 outputs welding power. When the switch is released from the ON state, the welding power supply 1 stops outputting the welding power. That is, welding is performed only when the torch switch 331 is pressed.

The display device 321 performs various displays and is arranged on a side of the handle 38 that is opposite from the torch switch 331 so that the operator performing the welding operation while gripping the handle 38 can easily see the display device.

The operation button 332, which is an operation means for performing operation to switch screens or change various set values, is arranged on the side of the handle 38 on which the display device 321 is arranged and between the grip portion of the handle 38 and the display device 321. The operation button 332 is made up of an upper button 332a, a lower button 332b, a left button 332c and a right button 332d. When each of the buttons 332a-332d is pressed, a corresponding operation signal is outputted to the controlling unit 36, and the controlling unit 36 performs the relevant processing. The left button 332c and the right button 332d are operation means for switching the screens displayed on the display device 321. The upper button 332a and the lower button 332b are operation means for changing the set values displayed on the display device 321.

A sensor for detecting the pressing of the operation button 332 is mounted on the controlling board 381. The display device 321 is also disposed on the same controlling board 381. In the present embodiment, the screen of the display device 321 has a predetermined angle with respect to the controlling board 381 so that the operator can easily operate the operation button 332 while watching the screen of the display device 321. Note however that the display device 321 may be arranged with its screen in parallel with the controlling board 381. On the controlling board 381 are also mounted a microcomputer as the controlling unit 36, a memory as the storage unit 34, a communication module as the communication unit 31 and various electronic components. The acceleration sensor 351 and the gyro sensor 352 are also mounted on the controlling board 381.

The acceleration sensor 351, which is a three-axis acceleration sensor, detects the acceleration in each axial direction and outputs the detected values to the controlling unit 36. The gyro sensor 352, which is a three-axis gyro sensor, detects the angular velocity about each axis and outputs the detected values to the controlling unit 36. The controlling unit 36 computes the torch angle of the welding torch 3 based on the detected values inputted from the acceleration sensor 351 and the gyro sensor 352 of the sensor unit 35.

The gyro sensor 352 detects the angular velocity about each of the three mutually orthogonal axes set in the sensor itself. The controlling unit 36 integrates the respective angular velocities to compute the rotational angle about each axis. Based on the rotational angle about each axis, the acceleration in each axial direction is computed. Further, the acceleration of the extremity of the nozzle 371 in each of the three axial directions is calculated by subtracting from the above-noted computed acceleration in each axial direction the relevant components of the acceleration due to the rotational movement of the gyro sensor 352 with respect to the extremity of the nozzle 371. The controlling unit 36 integrates the acceleration (which is due to the translational movement of the extremity of the nozzle 371) obtained by subtracting the relevant components of the gravitational acceleration from the acceleration of the extremity of the nozzle 371 in each axial direction, to compute the velocities in the respective axial directions. The obtained velocities in the three axial directions correspond to an example of the "travel direction information". The controlling unit 36 also computes, from each acceleration of the extremity of the nozzle 371 in the three axial directions, the posture of the welding torch 3 with respect to the direction of gravity. More specifically, the controlling unit 36 computes the posture vector of the central axis of the nozzle 371 of the welding torch 3. The computed posture vector corresponds to an example of the "posture information". The acceleration sensor 351 detects the acceleration in each axial direction of the three mutually orthogonal axes set in the sensor itself. The controlling unit 36 uses these accelerations for correcting the acceleration of the gyro sensor 352 in each axial direction. In the present embodiment, the acceleration sensor 351, the gyro sensor 352 and a part of the controlling unit 36 may correspond to an example of the "sensor unit". The controlling unit 36 computes the torch angle based on the velocity vector and the posture vector. Computation of the torch angle is described later.

The method for computing the velocity vector and the posture vector by the controlling unit 36 is not limited. For example, computation of the velocity vector and the posture vector by the controlling unit 36 may be performed based on the detected value by the gyro sensor 352 alone and without using the acceleration sensor 351. Alternatively, for example, computation of the velocity vector and the posture vector by the controlling unit 36 may be performed based on the detected value by the acceleration sensor 351 alone and without using the gyro sensor 352.

The appearance of the welding torch 3 is not limited to that described above. For example, the position and shape of the torch switch 331, the operation button 332 and the display device 321 are not limited. Although the operation button 332 in the present embodiment is made up of four separate buttons, the operation button may be a single cross button. Also, the number of buttons is not limited.

Next, the computation of the torch angle and the welding information setting process appropriate for the torch angle are described.

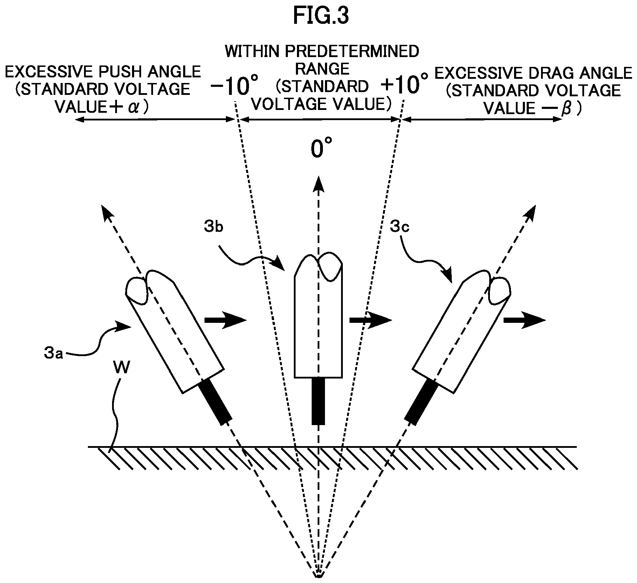

In the back-step welding, the inclination angle of the central axis of the nozzle 371 of the welding torch 3 with respect to the vertical upward direction is referred to as the drag angle. In the progressive welding, the inclination angle of the central axis of the nozzle 371 of the welding torch 3 with respect to the vertical upward direction is referred to as the push angle. In the present disclosure, the inclination angle of the central axis of the nozzle 371 of the welding torch 3 with respect the vertical upward direction is defined to have a positive value when the central axis is forwardly inclined in the welding travel direction, while being defined to have a negative value when the central axis is backwardly inclined in the welding travel direction. Hence, the torch angle having a positive value corresponds to the drag angle, and the torch angle having a negative value corresponds to the push angle. In Fig. 3, the welding torch 3b is in a state in which the central axis of the nozzle 371 is aligned with the vertical upward direction, meaning that the torch angle is 0°. The welding torch 3c is in a state in which the central axis of the nozzle 371 is inclined forward in the welding travel direction (indicated by bold arrows in the figure), which means back-step welding with a positive value of the torch angle (i.e., drag angle). The welding torch 3a is in a state in which the central axis of the nozzle 371 is inclined backward in the welding travel direction (indicated by bold arrows in the figure), which means progressive welding with a negative value of the torch angle (i.e., push angle).

When the torch angle stays within a predetermined range, the welding condition hardly changes. However, when the torch angle becomes greater beyond the predetermined range ("excessive drag angle") or the torch angle becomes smaller out of the predetermined range ("excessive push angle"), the welding condition may change significantly. In the present embodiment, the welding torch 3 is configured to detect the torch angle and automatically adjust the welding voltage to be appropriate for the detected torch angle, thereby preventing the welding condition from deteriorating. In particular, when the torch angle becomes less than the predetermined range ("excessive push angle"), the welding voltage is increased to reduce production of spatters.

The controlling unit 36 computes the velocity vector and the posture vector based on the detected values inputted from the acceleration sensor 351 and the gyro sensor 352, and computes the torch angle based on the velocity vector and the posture vector. Specifically, a plane is defined by the vertical direction and the velocity vector, and the posture vector is projected onto the plane. The angle formed between the projected vector and the vertical upward direction corresponds to the torch angle.

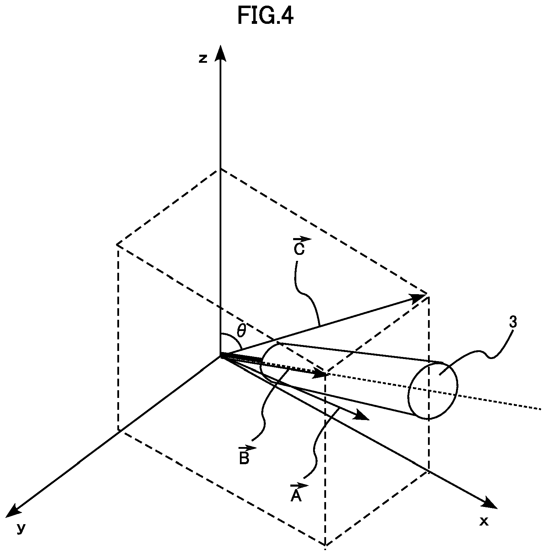

Fig. 4 is a view for explaining the torch angle. The vector A shown in the figure is a velocity vector and indicates the welding travel direction. The z axis indicates the vertical upward direction. The x axis is set in a manner such that that the xz plane defined by the z axis and the x axis is parallel to the velocity vector (vector A). The orientation of the x axis is set correspondingly to the orientation of the vector A. The y axis is orthogonal to the z axis and the x axis. The vector B is a posture vector and indicates the direction of the central axis of the nozzle 371 of the welding torch 3 (the direction from the extremity toward the base end). The vector C is the vector obtained by projecting the posture vector (vector B) onto the xz plane. The angle $\theta$ formed by the z axis and the vector C is the torch angle. When the orientation of the vector C is opposite to the orientation of the x axis, the angle $\theta$ has a negative value (push angle).

The method for computing the torch angle is not limited. For example, a method for computing the torch angle may include simplified calculations such as: determining whether the torch angle is a push angle or a drag angle based on the velocity vector (vector A) and the posture vector (vector B) (i.e., based on whether these two vectors form an obtuse angle or an acute angle) and; computing the angle formed between the posture vector (vector B) and the vertical upward direction (z axis) as the torch angle.

The controlling unit 36 reads the welding voltage set value stored in the storage unit 34 and sets this value as the standard voltage value. Such a welding voltage set value is set at and outputted from the welding power supply 1 and stored in the storage unit 34. When the computed torch angle $\theta$ is within a predetermined range, the controlling unit 36 sets the standard voltage value as the welding voltage set value. The predetermined range is set in advance as the range within which significant changes in welding condition will not occur. For example, in the present embodiment, the range of from -10° to 10° is set as the predetermined range. Note that this is merely an example, and how to set the predetermined range is not limited. The predetermined range is set depending on the thickness or material of the workpiece W and on the material, diameter or feed speed of the wire electrode for example, and is set automatically by inputting these types of information at the start of the welding. For the welding torch 3b shown in Fig. 3, the torch angle $\theta$ is 0°, which is within the predetermined range, and the standard voltage value is set as the welding voltage set value.

When the computed torch angle $\theta$ is short of the predetermined range ("excessive push angle"), the controlling unit 36 adds a predetermined value $\alpha$ to the standard voltage and sets the resulting value as the welding voltage set value. For the welding torch 3a shown in Fig. 3, since the torch angle $\theta$ is less than -10°, the value obtained by adding the predetermined value $\alpha$ to the standard voltage value is set as the welding voltage set value. On the other hand, when the computed torch angle $\theta$ is over the predetermined range ("excessive drag angle"), the value obtained by subtracting a predetermined value $\beta$ from the standard voltage value is set as the welding voltage set value. For the welding torch 3c shown in Fig. 3, since the torch angle $\theta$ is greater than 10°, the predetermined value $\beta$ is subtracted from the standard voltage value, and the resulting value is set as the welding voltage set value. The predetermined value $\alpha$ and the predetermined value $\beta$ are set in advance in accordance with the standard voltage value. For example, in the present embodiment, when the standard voltage value is 20 V, the value $\alpha$ and the value $\beta$ are set to 0.5 V. Thus, when the torch angle $\theta$ is in the predetermined range ($-10 \le \theta \le 10$), the welding voltage set value is set to the standard voltage value of 20V. When the torch angle $\theta$ is short of the predetermined range ($\theta < -10$), the welding voltage set value is 20.5 V, which is obtained by adding the value $\alpha$ to the standard voltage value. When the torch angle $\theta$ is over the predetermined range ($\theta > 10$), the welding voltage set value is 19.5 V, which is obtained by subtracting the value $\beta$ from the standard voltage value. The above-described values for $\alpha$ and $\beta$ are merely examples, and the predetermined values are not limited to these values. The predetermined value $\alpha$ and the predetermined value $\beta$ may be the same or may be different. Moreover, instead of adding a predetermined value, the standard voltage value may be multiplied by a predetermined value as a factor of rate (e.g. may be multiplied by 1.025 when the torch angle is small and multiplied by 0.975 when the torch angle is large) . In the present embodiment, the controlling unit 36 corresponds to an example of the "welding information obtaining unit".

The controlling unit 36 outputs the welding voltage set value to the communication unit 31 and makes the communication unit transmit the value to the welding power supply 1. The welding voltage set value transmitted from the communication unit 31 is received by and set in the welding power supply 1. The welding power supply 1 controls the output voltage to the welding voltage set value. Thus, the output voltage of the welding power supply 1 is controlled to a voltage appropriate for the torch angle θ. Note that the controlling unit 36 may not make the communication unit 31 transmit the welding voltage set value itself to the welding power supply 1, but may instead make the communication unit transmit a signal for increasing the welding voltage set value set in the welding power supply 1 by the predetermined value α (or decreasing the welding voltage set value by the predetermined value β).

In the present embodiment, information based on the torch angle θ is displayed on the display device 321. Specifically, the controlling unit 36 outputs the torch angle θ obtained by computation to the display unit 32. The display unit 32 displays the information based on the inputted torch angle θ on the display device 321. The torch angle θ may be displayed as it is, or whether the torch angle θ is within, smaller or larger the predetermined range may be displayed. An image of the torch may be displayed so that the push angle (or the drag angle) falling outside the predetermined range may be illustrated by animation. By looking at the display device 321, the operator can notice that the torch angle θ of the welding torch 3 is outside the predetermined range and change the posture of the welding torch 3 to a proper angle. The operator can also switch the screen of the display device 321 to display the welding voltage set value that is currently set and manually change the welding voltage set value. For example, when the operator observing the welding condition during welding wishes to increase (or decrease) the voltage, the left button 332c or the right button 332d may be pressed to switch the screen on the display device 321 to the "welding voltage setting" screen, and then the upper button 332a (or the lower button 332b) may be pressed to increase (or decrease) the welding voltage set value.

The torch angle θ may sometimes become too large (or too small) due to the inexperience of the operator or some characteristics of the workpiece W, for example. In such a case, the quality of welding may be degraded even when the welding voltage set value is changed in accordance with the torch angle θ. In the present embodiment, when the torch angle θ becomes too large (or too small), a warning is displayed on the display device 321. Specifically, when the torch angle θ becomes too large (e.g. exceeds 20°) or the torch angle θ becomes too small (e.g. becomes less than -20°), the controlling unit 36 outputs an instruction to make the display unit 32 display a warning. Note that the threshold for determining that the torch angle θ is too large (or too small) is not limited. The display unit 32, to which such an instruction is inputted from the controlling unit 36, displays a predetermined warning message (e.g. "the drag angle of the torch is too large" or "the push angle of the torch is too large") on the display device 321. Note that the way of giving a warning is not limited to displaying a warning on the display device 321. For example, a warning may be given by a voice message or buzzer sound. By the warning, the operator can notice that the torch angle θ has become too large (or too small) and change the posture of the welding torch 3 to a proper angle.

Further, when the torch angle θ rapidly changes, a welding defect may occur. In the present embodiment, a warning is displayed on the display device 321 also when such a rapid change of the torch angle θ occurs. Specifically, the controlling unit 36 computes the amount of change Δθ of the torch angle θ and outputs to the display unit 32 an instruction to display a warning when the absolute value of the amount of change Δθ exceeds a predetermined value (i.e., when the torch angle θ is changed rapidly). In the present embodiment, for example, a warning is given when the torch angle changes by 10° or more in one second. However, the present disclosure is not limited to this. The display unit 32, to which such an instruction is inputted from the controlling unit 36, displays a predetermined warning message (e.g. "Caution: Welding Defect ") on the display device 321. By the warning, the operator notices that a welding defect may have occurred and can find a welding defect.

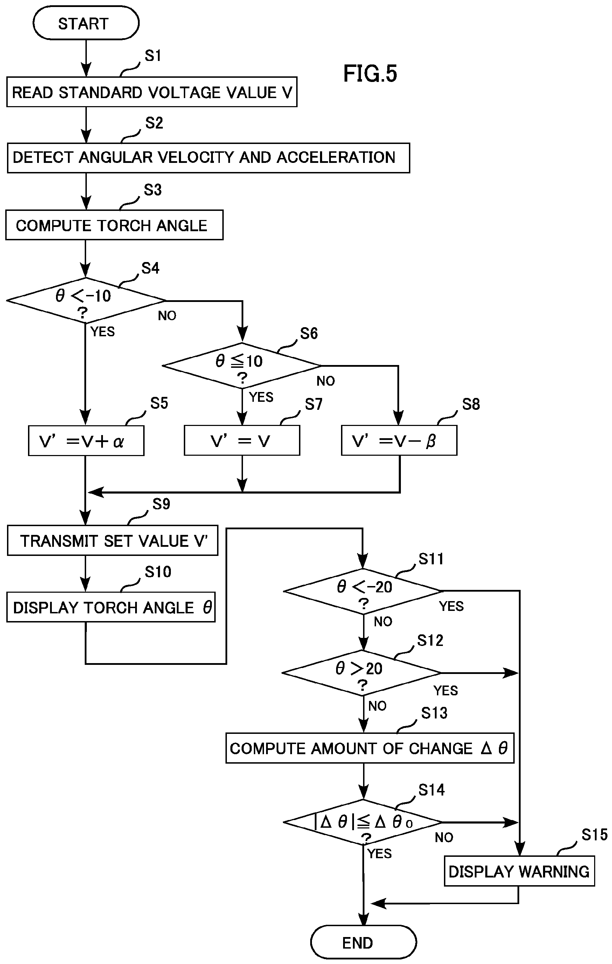

Fig. 5 is a flowchart for describing the welding information setting process performed by the controlling unit 36. This process is repeatedly performed at predetermined time intervals during the welding operation (while the torch switch 331 is pressed).

First, the welding voltage set value is read from the storage unit 34 as the standard voltage value V (S1). Then, the acceleration information and the angular velocity information are detected (S2), and the torch angle θ is computed (S3). Specifically, the controlling unit 36 obtains the acceleration values for the three axes detected by the acceleration sensor 351 and the angular velocity values for the three axes detected by the gyro sensor 352 and computes the torch angle θ through predetermined computation using these detected values.

Next, a welding voltage set value V' is set based on the torch angle θ (S4-S8) . First, whether or not the torch angle θ is less than -10° is determined (S4). When the torch angle θ is less than -10° (S4: YES), the value obtained by adding the predetermined value α to the standard voltage value V is set as the welding voltage set value V' (S5). When the torch angle θ is not less than -10° (S4: NO), whether or not the torch angle θ is not greater than 10° is determined (S6). When the torch angle θ is not greater than 10° (S6: YES), the torch angle θ is within the predetermined range, so that the standard voltage value V is set as the welding voltage set value V' (S7). When the torch angle θ is greater than 10° (S6: NO), the value obtained by subtracting the predetermined value β from the standard voltage value V is set as the welding voltage set value V' (S8).

Next, the welding voltage set value V' is transmitted to the welding power supply 1 (S9). Specifically, the controlling unit 36 outputs the welding voltage set value V' to the communication unit 31. The communication unit 31 transmits the welding voltage set value V' to the welding power supply 1. The welding power supply 1 receives and set the welding voltage set value V' to control the output voltage to the welding voltage set value V'. Thus, the output voltage of the welding power supply 1 is controlled to the voltage appropriate for the torch angle $\theta$.

Next, information based on the torch angle $\theta$ is displayed on the display device 321 (S10) . Specifically, the controlling unit 36 outputs the torch angle $\theta$ to the display unit 32. The display unit 32 displays the information based on the inputted torch angle $\theta$ on the display device 321.

Next, whether or not the torch angle $\theta$ is less than -20° is determined (S11). When the torch angle $\theta$ is less than -20° (S11: YES), the torch angle $\theta$ is determined to be too small. In such a case, a warning is displayed (S15), and the process is ended. Specifically, the controlling unit 36 outputs to the display unit 32 an instruction to display a warning. The display unit 32, to which the instruction is inputted, displays a predetermined warning message on the display device 321. On the other hand, when the torch angle $\theta$ is not less than -20° (S11: NO), whether or not the torch angle $\theta$ is greater than 20° is determined (S12). When the torch angle $\theta$ is greater than 20° (S12: YES), the torch angle $\theta$ is determined to be too large. In such a case, a warning is displayed (S15), and the process is ended. When the torch angle $\theta$ is not greater than 20° (S12: NO), the process proceeds to step S13.

Then, the amount of change $\Delta\theta$ of the torch angle $\theta$ is computed (S13). Specifically, the controlling unit 36 computes the amount of change $\Delta\theta$ based on the difference between the torch angle $\theta$ computed this time and the torch angle $\theta$ computed at the previous time. Then, whether or not the absolute value of the amount of change $\Delta\theta$ is not greater than a predetermined value $\Delta\theta_0$ is determined. When the absolute value of the amount of change $\Delta\theta$ is not greater than the predetermined value $\Delta\theta_0$ (S14: YES), the process is ended. When the absolute value of the amount of change $\Delta\theta$ is greater than the predetermined value $\Delta\theta_0$ (S14: NO), the change in the torch angle $\theta$ is determined to be too large. In such a case, a warning is displayed (S15), and the process is ended.

The flowchart shown in Fig. 5 is merely an example, and the welding information setting process performed by the controlling unit 36 is not limited to that described above. For example, the process for displaying an alarm (S11-S15) may be performed at a different timing in relation to the process for setting the welding information (S1-S10) (e.g. after the steps S1-S10 are performed a predetermined number of times).

The advantages of the welding torch 3 are described below.

According to the present embodiment, the controlling unit 36 computes the torch angle $\theta$ based on the detected values inputted from the acceleration sensor 351 and the gyro sensor 352, and adjusts (which includes "not change") the welding voltage set value in accordance with the computed torch angle $\theta$. The welding voltage set value is transmitted through the communication unit 31 and set in the welding power supply 1. The welding power supply 1 controls the output voltage to the welding voltage set value. Thus, the output voltage of the welding power supply 1 is controlled to a voltage appropriate for the torch angle $\theta$ of the welding torch 3. Thus, even when the torch angle $\theta$ of the welding torch 3 changes in the middle of the welding, degradation of the welding quality is prevented.

Moreover, according to the present embodiment, information based on the torch angle $\theta$ is displayed on the display device 321. Thus, by looking at the display device 321, the operator can notice that the torch angle $\theta$ of the welding torch 3 falls outside the predetermined range and change the posture of the welding torch 3 to a proper angle. The operator can also manually change the welding voltage set value when wishing to increase (or decrease) the voltage judging from the welding condition and the torch angle $\theta$.

Moreover, according to the present embodiment, when the torch angle $\theta$ becomes too large (or too small), the controlling unit 36 makes the display unit 32 display a warning. Thus, the operator can notice that the torch angle $\theta$ has become too large (or too small) and change the posture of the welding torch 3 to a proper angle. The controlling unit 36 also computes the amount of change $\Delta\theta$ of the torch angle $\theta$ and makes the display unit 32 display a warning when the absolute value of the amount of change $\Delta\theta$ exceeds a predetermined value $\Delta\theta_0$ (i.e., when the torch angle $\theta$ has changed rapidly). By the warning, the operator notices that a welding defect may have occurred and can find a welding defect.

The above description of the present embodiment relates to the case where the controlling unit 36 computes the velocity vector and the posture vector from the values detected by the acceleration sensor 351 and the gyro sensor 352 and also computes the torch angle $\theta$ based on the velocity vector and the posture vector, though the present disclosure is not limited to this. The values detected by the acceleration sensor 351 and the gyro sensor 352 may be used to compute the information indicating the welding travel direction (welding travel direction information) and the information indicating the posture of the welding torch 3 (posture information) , based on which the torch angle $\theta$ may be computed. The torch angle $\theta$ may not be computed, and the welding voltage set value may be changed based on the information indicating the welding travel direction and the information indicating the posture of the welding torch 3. Further, the information indicating the welding travel direction (travel direction information) or the information indicating the posture of the welding torch (posture information) may be computed from the values detected by sensors other than the acceleration sensor 351 or the gyro sensor 352. For example, the welding torch 3 may be provided with a sensor for detecting its position, and the changes in position of the welding torch 3 may be used to compute the information that indicates the welding travel direction (travel direction information).

In the present embodiment, determination is made as to which of the ranges $-10 \leq \theta \leq 10$ (predetermined range), $\theta < -10$ ("excessive push angle"), and $\theta > 10$ ("excessive drag angle") the torch angle $\theta$ currently belongs to. However, the present disclosure is not limited to this. For example, there may be provided more than one hysteresis range (a range for which the changing manner of the welding voltage set value may be different depending on the past torch angle $\theta$) at the boundary of adjacent ranges. For example, the division may be made such that there are a range of $\theta < -15$ ("excessive push angle"), a range of $-15 \leq \theta < -5$ (hysteresis range), a range of $-5 \leq \theta \leq 5$ (predetermined range), a range of $5 < \theta \leq 15$ (hysteresis range), and a range of $\theta > 15$ ("excessive drag angle"). In this case, for instance, when the torch angle $\theta$ shifts from the "excessive push angle" range to the adjacent hysteresis range, the welding voltage set value is maintained at the current value, which is obtained by adding the predetermined value $\alpha$ to the standard voltage value, and when the torch angle shifts from the hysteresis range to the predetermined range, the welding voltage set value is changed to the standard voltage value. Then, when the torch angle $\theta$ shifts from the predetermined range to the next hysteresis range, the welding voltage set value is maintained at the standard voltage value, and when the torch angle shifts from the hysteresis range to the "excessive drag angle" range, the welding voltage set value is changed to the value obtained by subtracting the predetermined value $\beta$ from the standard voltage value. With such an arrangement, it is possible to avoid frequent change of the welding voltage set value due to frequent change of the torch angle $\theta$ across the boundary of each range.

Although the present embodiment sets three ranges for discrimination of the torch angle $\theta$, the present disclosure is not limited to this, and two ranges or four or more ranges may be set. For example, five ranges of $\theta < -15$ (excessive push angle), $-15 \leq \theta < -10$ (push angle slightly over), $-10 \leq \theta \leq 10$ (predetermined range), $10 < \theta \leq 15$ (drag angle slightly over), $\theta > 15$ (excessive drag angle) may be set. In this case, the welding voltage set value can be changed in five steps.

The welding voltage set value may be changed linearly in accordance with the torch angle $\theta$. For example, the welding voltage set value V' may be calculated by the equation (1) given below, where V represents the welding voltage, V' represents the welding voltage set value, and a represents a predetermined coefficient. In this case, letting a = 0.05, V' = V when $\theta = 0$, V' = V + 0.5 when $\theta = -10$, V' = V - 0.5 when $\theta = 10$.

$$V' = V - a \cdot \theta \qquad \cdots (1)$$

Although the above description of the present embodiment relates to the case where the welding voltage set value is changed based on the torch angle $\theta$, the present disclosure is not limited to this. For example, a welding current set value may be changed instead of the welding voltage set value. In this case, a smaller welding current set value may be set for a greater torch angle $\theta$. Also, a current rise rate at the occurrence of short circuit may be adjusted. In this case, a smaller rise rate may be set for a greater torch angle $\theta$. Also, a plurality of types of welding information may be changed. Values of various types of welding information for torch angles $\theta$ may be stored as a table in the storage unit 34.

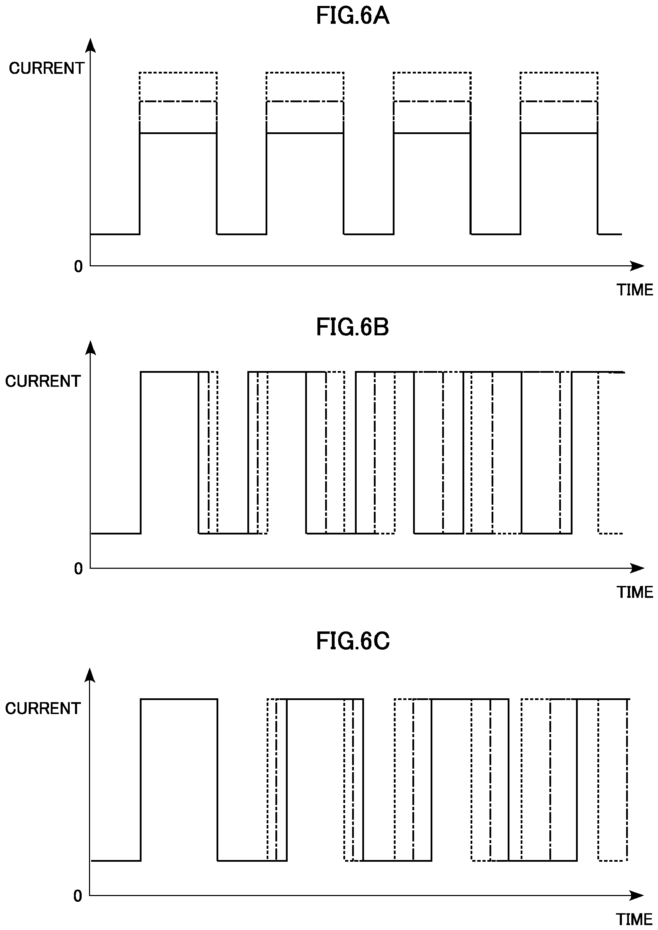

Although the above description of the present embodiment relates to the case where the output of the welding power supply 1 is direct current, the present disclosure is not limited to this. For example, the output of the welding power supply 1 may be pulse current. In this case, a smaller high-level current set value of the pulse (peak current set value) may be set for a greater torch angle $\theta$. Fig. 6A illustrates the output current waveforms in the case where the peak current set value is changed in accordance with the torch angle $\theta$. In the figure, indicated by the dashed lines is the waveform when the torch angle $\theta$ is $\theta < -10$ ("excessive push angle"), indicated by the dash-dotted lines is the waveform when the torch angle $\theta$ is $-10 \leq \theta \leq 10$ (predetermined range), and indicated by the solid lines is the waveform when the torch angle $\theta$ is $\theta > 10$ ("excessive drag angle"). A smaller low-level current set value of the pulse (base current set value) may be set for a greater torch angle $\theta$.

The high-level period of the pulse may be made shorter for a greater torch angle $\theta$. Fig. 6B illustrates output current waveforms in the case where the high-level period is changed in accordance with the torch angle $\theta$. In the figure, indicated by the dashed lines is the waveform when the torch angle $\theta$ is $\theta < -10$ ("excessive push angle"), indicated by dash-dotted lines is the waveform when the torch angle $\theta$ is $-10 \leq \theta \leq 10$ (predetermined range), and indicated by the solid lines is the waveform when the torch angle $\theta$ is $\theta > 10$ ("excessive drag angle"). The low-level period of the pulse may be made longer for a greater torch angle $\theta$. Fig. 6C illustrates output current waveforms in the case where the low-level period is changed in accordance with the torch angle $\theta$. In the figure, indicated by the dashed lines is the waveform when the torch angle $\theta$ is $\theta < -10$ ("excessive push angle"), indicated by the dash-dotted lines is the waveform when the torch angle $\theta$ is $-10 \leq \theta \leq 10$ (predetermined range), and indicated by the solid lines is the waveform when the torch angle $\theta$ is $\theta > 10$ ("excessive drag angle").

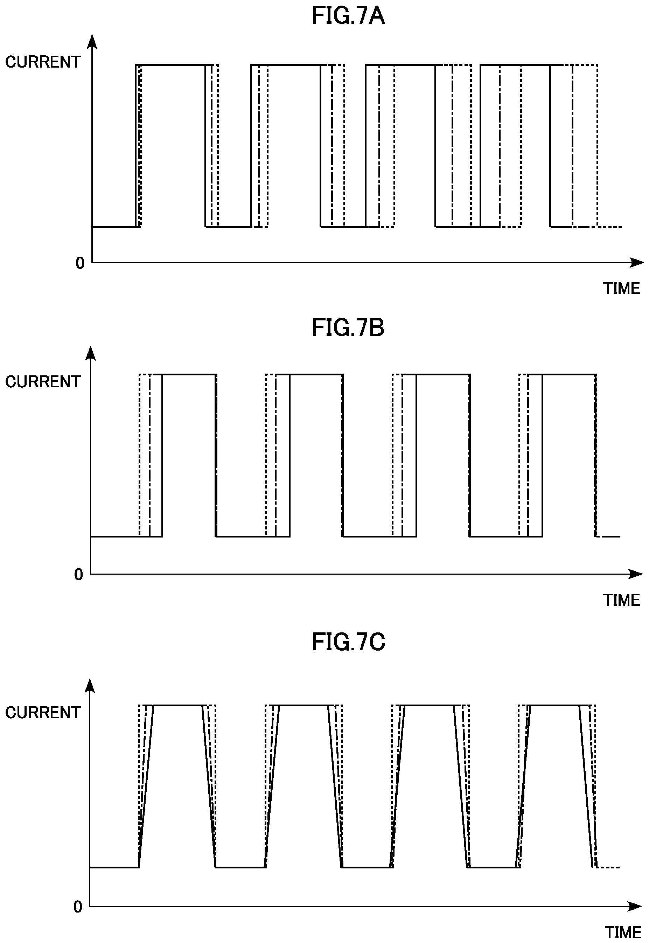

A higher pulse frequency may be set for a greater torch angle $\theta$. Fig. 7A illustrates output current waveforms in the case where the pulse frequency is changed in accordance with the torch angle $\theta$. In the figure, indicated by the dashed lines is the waveform when the torch angle θ is θ < -10 (excessive push angle), indicated by the dash-dotted lines is the waveform when the torch angle θ is -10 ≤ θ ≤10 (predetermined range), and indicated by the solid lines is the waveform when the torch angle θ is θ > 10 (excessive drag angle) . A smaller pulse duty ratio may be set for a greater torch angle θ. Fig. 7B illustrates output current waveforms in the case where the duty ratio of the pulse is changed in accordance with the torch angle θ. In the figure, indicated by the dashed lines is the waveform when the torch angle θ is θ < -10 (excessive push angle), indicated by the dash-dotted lines is the waveform when the torch angle θ is -10 ≤ θ ≤10 (predetermined range), and indicated by the solid lines is the waveform when the torch angle θ is θ > 10 (excessive drag angle).

The rising and falling slope of the pulse may be made gentler for a greater torch angle θ. Fig. 7C illustrates output current waveforms in the case where the rising and falling slope of the pulse is changed in accordance with the torch angle θ. In the figure, indicated by the dashed lines is the waveform when the torch angle θ is θ < -10 ("excessive push angle"), indicated by dash-dotted lines is the waveform when the torch angle θ is -10 ≤ θ ≤10 (predetermined range), and indicated by the solid lines is the waveform when the torch angle θ is θ > 10 ("excessive drag angle").

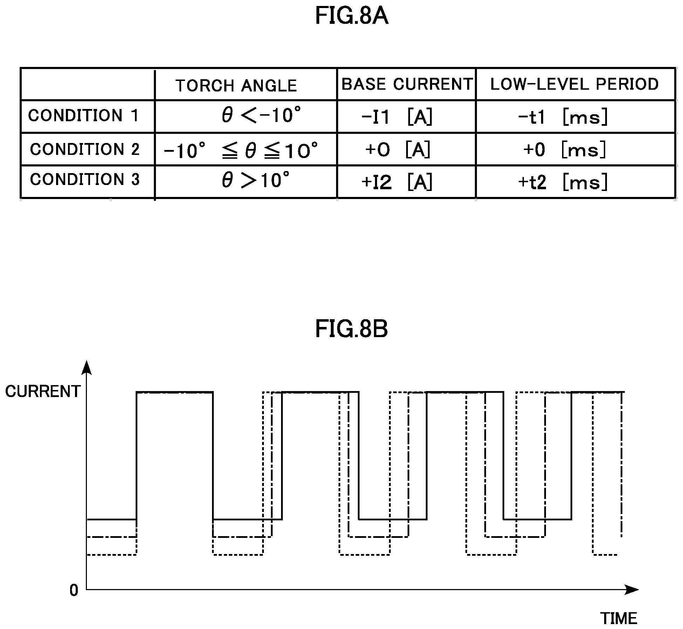

A plurality of types of welding information may be changed. In this case, the values of various types of welding information for the torch angles θ may be stored as a table in the storage unit 34. Fig. 8A shows an example of such a table. The table shown in Fig. 8A stores the following: when the torch angle θ is θ < -10 (excessive push angle), a predetermined value I1 [A] is subtracted from the base current, and a predetermined value t1 [ms] is subtracted from the low-level period (Condition 1) ; when the torch angle θ is -10 ≤ θ ≤10 (predetermined range), the base current and the low-level period are not changed (Condition 2); and when the torch angle θ is θ > 10 ("excessive drag angle"), a predetermined value I2 [A] is added to the base current and a predetermined value t2 [ms] is added to the low-level period (Condition 3). Fig. 8B illustrates output current waveforms in the case where the base current set value and the low-level period are changed in accordance with the torch angle θ and the table shown in Fig. 8A. In the figure, indicated by the dashed lines is the waveform when the torch angle θ is θ < -10 (excessive push angle), indicated by the dash-dotted lines is the waveform when the torch angle θ is -10 ≤ θ ≤10 (predetermined range), and indicated by the solid lines is the waveform when the torch angle θ is θ > 10 (excessive drag angle) . For a greater torch angle θ, the difference between the base current and the peak current is made smaller, and the low-level period is increased, so that the amount of power supplied is reduced.

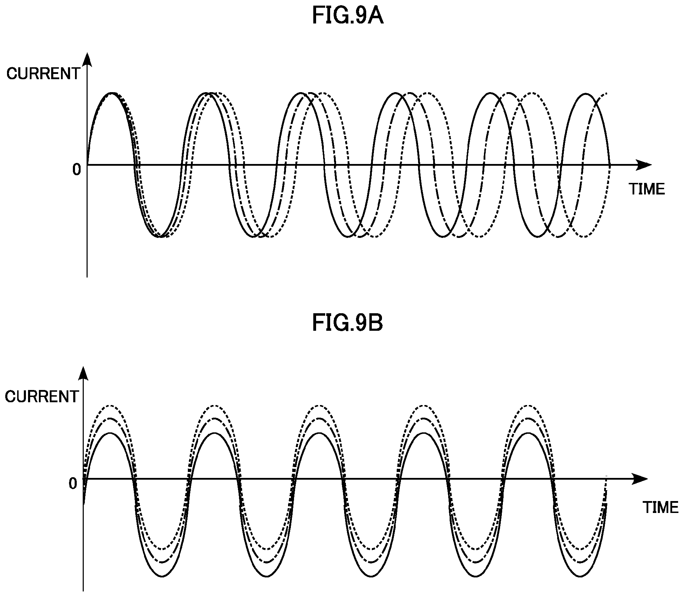

The output of the welding power supply 1 may be alternating current. In this case, a higher alternating current frequency may be set for a greater torch angle θ. Fig. 9A illustrates output current waveforms in the case where the alternating current frequency is changed in accordance with the torch angle θ. In the figure, indicated by the dashed lines is the waveform when the torch angle θ is θ < -10 (excessive push angle), indicated by the dash-dotted lines is the waveform when the torch angle θ is -10 ≤ θ ≤10 (predetermined range), and indicated by the solid lines is the waveform when the torch angle θ is θ > 10 (excessive drag angle).

Further, the time ratio during which the polarity of the welding torch 3 is positive may be reduced for a greater torch angle θ. When the welding power supply 1 outputs alternating current, the polarity of the welding torch 3 may become positive while that of the workpiece W negative, then the polarity of the welding torch 3 becomes negative while that of the workpiece W positive, and such polarity change occurs repeatedly. In this process, the ratio of the time during which the welding torch 3 is at positive polarity may be adjusted. Specifically, in the equation (2) given below, which represents the control target Iref of the output alternating current of the welding power supply 1, the offset value x is adjusted. Note that A represents amplitude, ω represents angular frequency, and φ represents initial phase. As the offset value x becomes smaller, the waveform of the current shifts toward the negative side, the ratio of the time during which the welding torch 3 is made positive reduces, and the ratio of the time during which the workpiece W is made positive increases. As the ratio of the time during which the welding torch 3 is made positive reduces, the wire electrode becomes less likely to melt. Conversely, as the offset value x increases, the waveform of the current shifts toward the positive side, the ratio of the time during which the welding torch 3 is made positive increases, and the ratio of the time during which the workpiece W is made positive reduces. As the ratio of the time when the welding torch 3 is made positive increases, the wire electrode becomes more likely to melt.

$$Iref = A \cdot \sin (\omega t + \varphi) + x \quad \cdots (2)$$

Fig. 9B illustrates output current waveforms in the case where the ratio of the time during which the welding torch 3 is made positive is changed in accordance with the torch angle θ. In the figure, indicated by the dashed lines is the waveform when the torch angle θ is θ < -10 (excessive push angle), indicated by the dash-dotted lines is the waveform when the torch angle θ is -10 ≤ θ ≤10 (predetermined range), and indicated by the solid lines is the waveform when the torch angle θ is θ > 10 (excessive drag angle) .

Note that described above are examples of a welding information parameter. The welding information parameter that changes in accordance with the torch angle θ is not limited to those described above.

Although the above description of the present embodiment relates to the case where the welding power supply 1 and the wire feeder 2 communicate with each other via the signal line 8, the present disclosure is not limited to this. For example, communication may be performed by superimposing signals on the power cables 41 and 42 or the power transmission lines 5. In this case, the signal line 8 for connecting the welding power supply 1 and the wire feeder 2 may not be used.

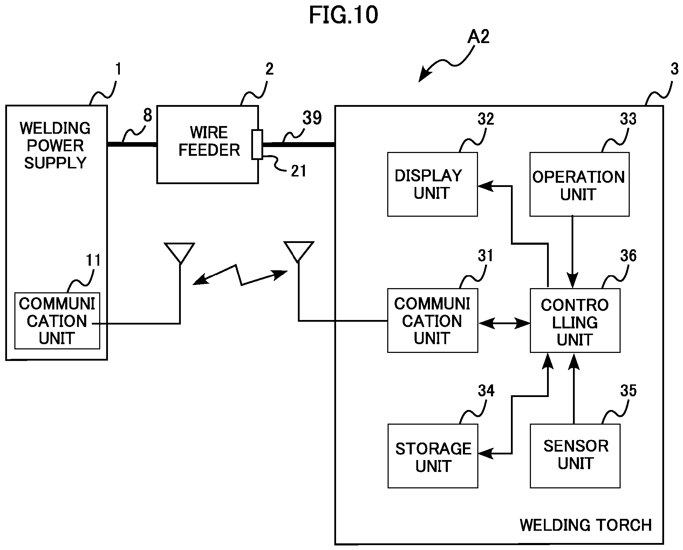

Fig. 10 is a block diagram illustrating the functional configuration of the welding system A2 according to a second embodiment. In Fig. 10, the elements that are the same as or similar to those of the first embodiment are denoted by the same reference signs as those used for the first embodiment.

The welding system A2 shown in Fig. 10 differs from the welding system A1 of the first embodiment in that the welding torch 3 wirelessly communicates with the welding power supply 1.

The communication unit 31 transmits and receives signals via an antenna. The communication unit 31 modulates a signal inputted from the controlling unit 36 and transmits it as an electromagnetic wave. The communication unit 31 also demodulates the electromagnetic wave received by the antenna and outputs it to the controlling unit 36. The communication unit 31 wirelessly communicates with the communication unit 11 of the welding power supply 1.

The second embodiment provides the same advantages as those of the first embodiment.

The welding torch and the welding system according to the present disclosure is not limited to the foregoing embodiments. The specific configuration of each part of the welding torch and the welding system according to the present disclosure may be varied in many ways.

**Claims**

1. A welding torch comprising:

   a sensor unit that detects travel direction information of the welding torch and posture information of the welding torch;
   a welding information obtaining unit that obtains welding information corresponding to the travel direction information and the posture information detected by the sensor unit; and
   a communication unit that transmits the welding information obtained by the welding information obtaining unit to a welding power supply that supplies electric power to the welding torch.

2. The welding torch according to claim 1, wherein the sensor unit detects a velocity vector of an extremity of the welding torch as the travel direction information and detects a posture vector of an axial direction of the extremity of the welding torch as the posture information.

3. The welding torch according to claim 1 or 2, wherein the welding information obtaining unit computes a torch angle based on the travel direction information and the posture information and obtains, based on the computed torch angle, welding information corresponding to the computed torch angle.

4. The welding torch according to claim 3, wherein the welding information obtaining unit determines which of a plurality of ranges the torch angle belongs to and obtains the welding information based on a value associated with the range to which the torch angle belongs.

5. A welding system comprising:

   a welding torch as set forth in any one of claims 1-4; and
   the welding power supply.

# FIG.1A

# FIG.1B

FIG.2A

FIG.2B

# FIG.3

EXCESSIVE PUSH ANGLE (STANDARD VOLTAGE VALUE$+\alpha$)

WITHIN PREDETERMINED RANGE (STANDARD VOLTAGE VALUE)

$-10°$ $+10°$

$0°$

EXCESSIVE DRAG ANGLE (STANDARD VOLTAGE VALUE$-\beta$)

3b

3c

3a

W

# FIG.4

FIG.5

START

S1
READ STANDARD VOLTAGE VALUE V

S2
DETECT ANGULAR VELOCITY AND ACCELERATION

S3
COMPUTE TORCH ANGLE

S4
$\theta < -10$ ?
YES / NO

S6
$\theta \leqq 10$ ?
YES / NO

S5
$V' = V + \alpha$

S7
$V' = V$

S8
$V' = V - \beta$

S9
TRANSMIT SET VALUE V'

S10
DISPLAY TORCH ANGLE $\theta$

S11
$\theta < -20$ ?
YES / NO

S12
$\theta > 20$ ?
YES / NO

S13
COMPUTE AMOUNT OF CHANGE $\Delta\theta$

S14
$|\Delta\theta| \leqq \Delta\theta_0$ ?
YES / NO

S15
DISPLAY WARNING

END

## FIG.6A

CURRENT

0

TIME

## FIG.6B

CURRENT

0

TIME

## FIG.6C

CURRENT

0

TIME

## FIG.7A

CURRENT

0

TIME

## FIG.7B

CURRENT

0

TIME

## FIG.7C

CURRENT

0

TIME

# FIG.8A

| | TORCH ANGLE | BASE CURRENT | LOW-LEVEL PERIOD |
|---|---|---|---|
| CONDITION 1 | $\theta < -10°$ | $-I1$ [A] | $-t1$ [ms] |
| CONDITION 2 | $-10° \leqq \theta \leqq 10°$ | $+0$ [A] | $+0$ [ms] |
| CONDITION 3 | $\theta > 10°$ | $+I2$ [A] | $+t2$ [ms] |

# FIG.8B

## FIG.9A

## FIG.9B

FIG.10

A2

1 WELDING POWER SUPPLY

8

2 WIRE FEEDER

39

21

11 COMMUNICATION UNIT

3 WELDING TORCH

32 DISPLAY UNIT

33 OPERATION UNIT

31 COMMUNICATION UNIT

36 CONTROLLING UNIT

34 STORAGE UNIT

35 SENSOR UNIT

# INTERNATIONAL SEARCH REPORT

| International application No. |
| --- |
| PCT/JP2017/043010 |

**A. CLASSIFICATION OF SUBJECT MATTER**
Int.Cl. B23K9/10(2006.01)i, B23K9/095(2006.01)i, B23K9/29(2006.01)i

According to International Patent Classification (IPC) or to both national classification and IPC

**B. FIELDS SEARCHED**

Minimum documentation searched (classification system followed by classification symbols)
Int.Cl. B23K9/10, B23K9/095, B23K9/29

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2008-515646 A (KARAKAS, Erdogan) 15 May 2008, paragraphs | 1-3, 5 |
| A | [0009]-[0072], fig. 1-11 & US 2007/0187378 A1, paragraphs | 4 |
| | [0012]-[0092] & WO 2006/042572 A1 & EP 1812200 A1 & KR | |
| | 10-2007-0085350 A & CN 101068648 A & AT 431218 T & DK 1812200 | |
| | T3 & ES 2327136 T3 & KR 10-2011-0113665 A | |
| | | |
| A | JP 6-87075 A (ISHIKAWAJIMA-HARIMA HEAVY INDUSTRIES CO., LTD.) | 1-5 |
| | 29 March 1994, paragraphs [0012]-[0026], fig. 1-7 (Family: none) | |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 January 2018 (04.01.2018) | 16 January 2018 (16.01.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)